**Europäisches Patentamt**

**European Patent Office**

**Office européen des brevets**

(11) Veröffentlichungsnummer: **0 022 221**
**A1**

(12) **EUROPÄISCHE PATENTANMELDUNG**

(21) Anmeldenummer: 80103617.9

(22) Anmeldetag: 26.06.80

(51) Int. Cl.³: **B 60 R 9/08**

(30) Priorität: 05.07.79 DE 2927146
19.02.80 DE 3006144

(43) Veröffentlichungstag der Anmeldung:
14.01.81 Patentblatt 81.2

(84) Benannte Vertragsstaaten:
AT BE CH FR GB IT LI LU NL SE

(71) Anmelder: Schnell, Josef
Rosenheimer Strasse 15
D-8201 Söchtenau(DE)

(72) Erfinder: Schnell, Johann
Rosenheimer Strasse 15
D-8201 Söchtenau(DE)

(74) Vertreter: Späth, Helmut, Dipl.-Phys. Dr. rer. nat.
Max-Josefs-Platz 6
D-8200 Rosenheim(DE)

(54) **Kraftfahrzeug-Dachträger für einen Wasserfahrzeugrumpf.**

(57) Ein Dachträger (2a, 3a, 2b, 3b, 4) umfaßt als wesentliches Bauelement in seinem mittleren Teil (4) einen nach oben weisenden, zum formschlüssigen Eingriff in die Schwertkastenaussparung (10) des Wasserfahrzeugrumpfes (11) bestimmten Vorsprung (7', 9a, 9b), dessen Querschnitt demjenigen der Schwertkastenaussparung (10) angepaßt ist. Darüber hinaus weist der Vorsprung einen über die Schwertkastenaussparung nach oben ragenden Endabschnitt (8') auf, mit welchem eine als rechteckige Blattfeder ausgebildete Druckplatte (14) verbindbar ist. Diese Druckplatte (14) liegt federnd gegen den Wasserfahrzeugrumpf (11) an und überdeckt die Schwertkastenaussparung (10).

Fig.6

Beschreibung
- - - - - - -

Die Erfindung betrifft einen Dachträger nach dem
Oberbegriff des Patentanspruchs 1.

Aus der französischen Offenlegungsschrift 23 91 879
sind bereits Dachträger der erwähnten Art bekannt,
bei welchen der Vorsprung aus zwei vertikalen parallelen Bolzen besteht, deren Abstand etwas geringer als die Länge und deren Durchmesser erheblich geringer als die Breite der Mittelaussparung bzw. Schwertkastenaussparung ist. Die Höhe
der Bolzen entspricht genau der Dicke eines Surfbrettes, wenn dieses auf einen Gabelbaum aufgelegt
wurde. Die Druckplatte liegt an den oberen Stirnflächen der Bolzen auf und kann durch Anziehen
von in die Bolzen eingreifenden Schrauben nicht
weiter nach unten gedrückt werden. Es wäre zwar
möglich, diese Bolzen in einem solchen Abstand
voneinander anzuordnen, daß dies angenähert der
lichten Länge der Schwertkastenaussparung entspricht, jedoch ist praktisch der Abstand stets
etwas geringer, weil es sonst schwierig wäre, das
Surfbrett beim Aufsetzen so auszurichten, daß eine
Beschädigung der Oberfläche vermieden wird. Da der
Durchmesser der Bolzen wesentlich geringer als die
Breite der Schwertkastenaussparung ist, sind zwei
Anschlagzapfen vorgesehen, welche eine Auslenkung
der Surfbrettlängsachse um die Surfbretthochachse
verhindern sollen. Damit ist aber der Dachträger
nur für Surfbretter von vorgegebener Breite im
Mittelbereich zu verwenden, was wiederum im Gegensatz zu einer anzustrebenden möglichst universellen

BAD ORIGINAL

Verwendbarkeit steht.

Ferner sind Dachträger anderer Art bekannt, bei welchen die Befestigungseinrichtung für den Wasserfahrzeugrumpf mehrere Riemenverankerungen an den Tragstegen umfaßt, so daß der Wasserfahrzeugrumpf sowohl in seinem vorderen als auch hinteren Bereich mittels je eines Befestigungsriemens festgezurrt werden kann. Derartige Dachträger sind insbesondere zur Verwendung in Verbindung mit Surfbrettern gedacht. Da der Wasserfahrzeugrumpf in Verbindung mit den Befestigungsriemen dem Fahrtwind ausgesetzt ist, können sich erhebliche auf die Befestigungseinrichtung wirkende Kräfte ausbilden, die gegebenenfalls auch zu einer Lockerung oder Lösung des Wasserfahrzeugrumpfes führen können, was aus Sicherheitsgründen kaum hingenommen werden kann. Darüber hinaus ist das sichere Festzurren des Wasserfahrzeugrumpfes jedesmal mit einem erheblichen Zeitaufwand verbunden.

Aufgabe der Erfindung ist ausgehend von dem eingangs an erster Stelle erwähnten Stand der Technik die Schaffung eines verbesserten Dachträgers, welcher bei universeller Anwendbarkeit ein sicheres Festhalten des Wasserfahrzeugrumpfes gewährleistet und darüber hinaus eine Befestigung und Lösung des Wasserfahrzeugrumpfes mit geringem Zeitaufwand ermöglicht. Erreicht wird dies durch die kennzeichnenden Merkmale des Patentanspruchs 1.

Durch den erfindungsgemäß vorgesehenen, zum Eingriff in die Schwertkastenaussparung des Wasserfahrzeugrumpfes bestimmten Vorsprung wird in Verbindung mit der federnden Druckplatte erreicht, daß nicht nur der Wasserfahrzeugrumpf in Fahrtrichtung nicht von dem Dach nach rückwärts weggleiten kann, sondern daß darüber hinaus der erfindungsgemäße Dachträger für alle derzeit auf
dem Markt befindlichen Surfbretter ohne Rücksicht
auf deren Breite universell verwendbar ist, wobei
insbesondere ein gefährliches Spiel des Bootskörpers um die Hochachse mit Sicherheit vermieden
werden kann. In diesem Zusammenhang ist wesentlich,
daß der erfindungsgemäße Vorsprung eine geringere
Höhe aufweist als dies der Dicke des Surfbrettes
entspricht, damit die federnde Druckplatte ihre
Funktion erfüllen kann. Es wird auf diese Weise
insbesondere auch erreicht, daß das Surfbrett nach
dem Befestigen nicht nur locker auf dem Dachträger liegt, sondern vielmehr unter Vorspannung angedrückt wird, so daß sich auch ein prinzipiell
vielleicht mögliches Spiel des Bootskörpers parallel zur Längsachse wegen zu hoher Reibungskräfte nicht ausbilden kann.

Durch die Weiterbildung nach dem Patentanspruch 2
wird eine besonders einfache Einrichtung zum
Festspannen der Druckplatte gegen den Wasserfahrzeugrumpf geschaffen. Durch die Ausgestaltung nach
dem Patentanspruch 3 kann auch eine Diebstahlsicherung ermöglicht werden.

Durch die Weiterbildung nach dem Patentanspruch 4
wird ermöglicht, daß die auf das Kraftfahrzeug
wirkende zusätzliche Belastung seitens des Wasserfahrzeugrumpfes in optimaler Weise so verteilt werden kann, daß das Kraftfahrzeug nicht einseitig
überbelastet wird.

Durch die Weiterbildung nach dem Patentanspruch 5 wird die Anbringung mehrerer Wasserfahrzeugrümpfe auf dem Dachträger in Nebeneinanderanordnung ermöglicht.

Durch die Weiterbildung nach dem Patentanspruch 6 wird erreicht, daß auf einem Verbindungstragsteg bzw. auf jedem Verbindungstragsteg zwei oder mehrere Wasserfahrzeugrümpfe in Übereinanderanordnung befestigt werden können.

Durch die Weiterbildung nach dem Patentanspruch 7 wird erreicht, daß bei einer Befestigung des Wasserfahrzeugrumpfes auf dem Dachträger der Zugbolzen, welcher die Druckplatte durchsetzt, durch die Mittelaussparung des Wasserfahrzeugrumpfes in die vertikale Aufnahme des Vorsprunges eingeführt und dort beispielsweise durch eine Vierteldrehung axial verriegelt wird. Danach ist es lediglich noch erforderlich, den in der Freigabestellung befindlichen Exzenterhebel in einem rechten Winkel horizontal in die Spannstellung abzuschwenken und das freie Ende des Exzenterhebels mit der Druckplatte zu verriegeln. Durch den Eingriff des Drehsicherungsvorsprunges in die Mittelaussparung des Wasserfahrzeugrumpfes ist es nicht mehr möglich, den Zugbolzen zu drehen, so daß auch dessen axialer Verriegelungseingriff mit der vertikalen Aufnahme des Vorsprunges nicht gelöst werden kann. Es ist also der Wasserfahrzeugrumpf auf dem Dachträger diebstahlsicher angebracht. Insgesamt ergibt sich deshalb eine erhebliche Zeiteinsparung bei der Befestigung des Wasserfahrzeugrumpfes, weil anstelle des eine Vielzahl von Umdrehungen erfordernden Einschraubens des Zugbolzens,

, dieser nach dem Erfindungsgedanken lediglich um eine Teildrehung, beispielsweise Vierteldrehung, gedreht werden muß, um den axialen Verriegelungseingriff herbeizuführen. Durch einen weiteren Handgriff, nämlich das Abschwenken des Exzenterhebels in die Spannstellung, ist der Wasserfahrzeugrumpf auf dem Dachträger bereits fixiert.

Durch die Weiterbildung nach dem Patentanspruch 8 läßt sich eine günstige Herstellung des Zugbolzens sowie der vertikalen Aufnahme des Vorsprunges erzielen. Diese Vorteile werden durch die Ausgestaltung nach dem Patentanspruch 9 in einem weiter gesteigerten Maße erzielt.

Durch die Weiterbildung nach dem Patentanspruch 10 wird erreicht, daß wegen der Hebelwirkung der Druckplatte die zum axialen Verriegelungseingriff mit dem Vorsprung erforderliche Teildrehung leicht auf den Zugbolzen zu übertragen ist.

Durch die Weiterbildung nach dem Patentanspruch 11 läßt sich die von dem Exzenterhebel über die Druckplatte auf den Wasserfahrzeugrumpf übertragene Kraft genau und nach Wunsch einstellen.

Die Erfindung ist nachstehend anhand der Zeichnung näher erläutert. Es zeigen.

Fig. 1 ein Ausführungsbeispiel eines erfindungsgemäßen Dachträgers in Seitenansicht,

Fig. 2 den Dachträger in Draufsichtdarstellung gemäß Betrachtung nach einer Linie II-II von Fig. 1,

Fig. 3 einen in Verbindung mit dem Dachträger nach Fig. 1 und 2 verwendbaren Zusatzvorsprung in einer gegenüber Fig. 1 vergrößerten Seitenansicht,

Fig. 4 den Zusatzvorsprung gemäß Betrachtung nach der Linie IV-IV von Fig. 3,

Fig. 5 eine einen Bestandteil des Dachträgers nach Fig. 1 und 2 bildende Druckplatte in Form einer rechteckigen Blattfeder in gegenüber Fig. 1 und 2 vergrößerter Draufsichtdarstellung,

Fig. 6 ein abgewandeltes Ausführungsbeispiel eines erfindungsgemäßen Dachträgers in Seitenansicht,

Fig. 7 einen Ausschnitt aus Fig. 6 in demgegenüber vergrößerter Vertikalschnittdarstellung,

Fig. 8 und 9 Schnitte längs der Linien VIII-VIII bzw. IX-IX von Fig. 7.

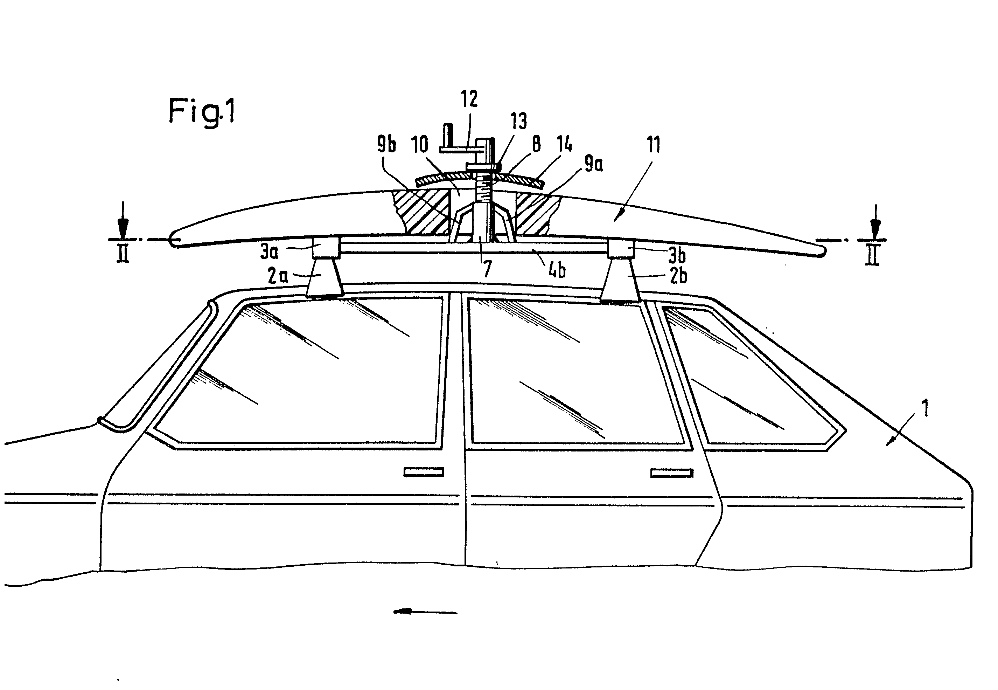

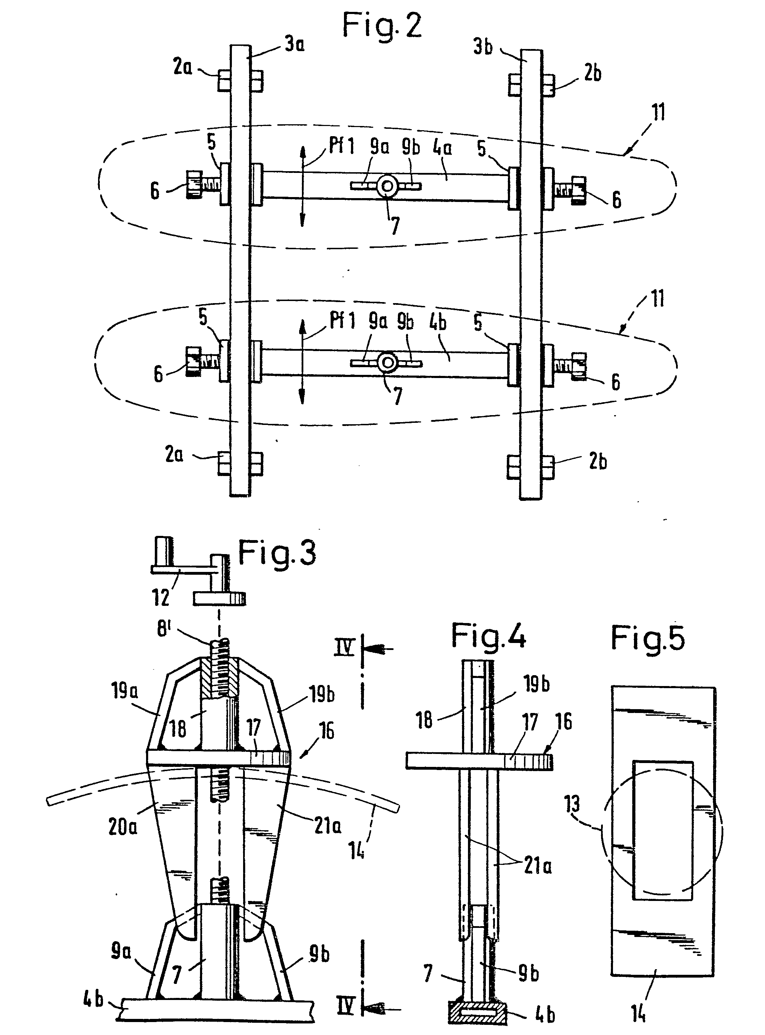

Auf dem Dach eines Kraftfahrzeuges 1 sind gemäß Fig. 1 und 2 mittels bekannter (lediglich schematisch dargestellter) Paare von Dachrinnenspannern 2a, 2b hiermit verbundene Tragstege 3a bzw. 3b fest verbunden, die parallel zur Querachse des Kraftfahrzeuges 1 verlaufen. Die Bauelemente 2a, 3a, 2b, 3b bilden einen herkömmlichen Universaldachträger, wie er zum Transport von langen sperrigen Gütern, beispielsweise Holzbrettern oder Balken, bekannt ist. Diese Bauelemente bilden also keinen Teil der vorliegenden Erfindung.

Zwischen den Tragstegen 3a, 3b verlaufen im Abstand zueinander sowie parallel zu der Längsachse des Kraftfahrzeuges 1 zwei Verbindungstragstege 4a, 4b, von denen jeder an beiden Enden je einen im Formschlußeingriff (beispielsweise Schwalbenschwanzquerschnitt) mit den Tragstegen 3a, 3b befindlichen Führungskopf 5 aufweist. Mittels je einer zugeordneten Stellschraube 6 sind die Führungsköpfe 5 in einer gewünschten Lage gegenüber den Tragstegen 3a, 3b feststellbar. Es ergibt sich also bezüglich der Verbindungstragstege 4a, 4b eine Verschiebemöglichkeit parallel zur Längsachse des Kraftfahrzeuges 1 gemäß den Doppelpfeilen Pf1.

Jeder Verbindungstragsteg 4a, 4b weist in seinem mittleren Teil einen nach oben weisenden Vorsprung in Form eines Zapfens 7 mit einer Gewindebohrung auf, die ihrerseits zur Aufnahme eines Schraubbolzens 8 bestimmt ist. Von dem oberen Ende des Zapfens 7, und zwar diametral von der Vorderseite und Rückseite ausgehend, verläuft je eine Verstrebung 9a, 9b zu dem zugeordneten Verbindungstragsteg 4a bzw. 4b. Auf diese Weise ergibt sich in Draufsicht (Fig. 2) eine solche Querschnittsform des Zapfens 7 mit den Verstrebungen 9a, 9b, daß ein Formschlußeingriff in eine Schwertkastenaussparung 10 eines Wasserfahrzeugrumpfes 11 mit geringem Dreh- und längsaxialem Verschiebespiel möglich ist.

Jeder Schraubbolzen 8 ist an seinem oberen Ende in Form einer Kurbel 12 ausgebildet, die an ihrem unteren Ende einen Anschlagflansch 13 aufweist. Dieser ist zur Anlage gegen eine als rechteckige Blattfeder ausgebildete federnde konvexe Druckplatte 14 bestimmt. Die Abmessungen der Druckplatte 14 müssen hierbei allseitig die Querschnittsabmessungen der Schwertkastenaussparung 10 übersteigen.

Zur Befestigung eines Wasserfahrzeugrumpfes 11 wird dessen Schwertkastenaussparung 10 bei aus dem Zapfen 7 herausgedrehtem Schraubbolzen 8 mit dem Zapfen 7 bzw. den Verstrebungen 9a, 9b in Eingriff gebracht und abgesenkt, so daß der vordere und hintere Bereich des Wasserfahrzeugrumpfes 11 auf den Tragstegen 3a bzw. 3b ruht. Darauf wird die Druckplatte 14 auf die Schwertkastenaussparung 10 gelegt, wonach der Schraubbolzen 8 mittels der Kurbel 12 so weit eingeschraubt wird, bis über den Anschlagflansch 13 sowie die Druckplatte 14 eine ausreichende Vorspannungskraft auf den Wasserfahrzeugrumpf 11 übertragen wird.

Wie sich aus Fig. 3 und 4 ergibt, ist auf den durch die Bauelemente 7, 9a, 9b gebildeten Vorsprung ein Zusatzvorsprung 16 aufsetzbar. Dieser besteht aus einer Flanschplatte 17, auf welcher ein Zapfen 18 mit Gewindebohrung nebst Verstrebungen 19a, 19b sitzt. Die Bauelemente 18, 19a, 19b entsprechen in ihren Abmessungen in der Regel (wenn nämlich gleiche Wasserfahrzeugrümpfe mit gleichen Abmessungen der Schwertkastenaussparung zu transportieren sind) denjenigen der Bauelemente 7, 9a, 9b. An der Unterseite der Flanschplatte 17 sind zwei Paare von Klauen 20a, 21a vorgesehen. Wie sich am besten aus Fig. 4 ergibt, ist der Abstand eines Klauenpaares 20a bzw. 21a so gewählt, daß ein Formschlußeingriff mit einer zugeordneten Verstrebung 9a bzw. 9b erfolgen kann. Die Stärke jeder Klaue der Klauenpaare 20a, 21a ist so gewählt, daß die Außenabmessungen den Durchmesser des Zapfens 7 nicht wesentlich übersteigen.

Zur Übereinanderbefestigung zweier Wasserfahrzeugrümpfe wird zuerst der eine Wasserfahrzeugrumpf auf die Tragstege 3a, 3b aufgelegt, wobei die Bauelemente 7, 9a, 9b in Eingriff mit der Schwertkastenaussparung 10 gelangen, wie dies bereits vorangehend beschrieben wurde. Nach dem Aufsetzen eines ein Zubehörteil des ersten Bootskörpers bildenden Gabelbaumes oder anderen Auflageteiles wird ein zweiter (nicht gezeigter Wasserfahrzeugrumpf) parallel zu dem darunter befindlichen Wasserfahrzeugrumpf aufgesetzt, wonach der Zusatzvorsprung 16 von oben her in die Schwertkastenaussparung des oberen Wasserfahrzeugrumpfes eingeführt und bezüglich der Klauenpaare 20a, 21a mit den Bauelementen 7, 9a, 9b in Formschlußeingriff gebracht wird. Nunmehr kann ein gegenüber den in Fig. 1 veranschaulichten Schraubbolzen 8 entsprechend verlängerter Schraubbolzen 8' nebst Kurbel 12 in den Zapfen 7 geschraubt werden, so daß auf diese Weise zwei Wasserfahrzeugrümpfe in Übereinanderanordnung befestigt werden können. Es versteht sich, daß in Verbindung mit dem Zusatzvorsprung 16 auch ein spezieller Dachträger mit zwei "Etagen" eingesetzt werden kann, was bedeutet, daß in festem Abstand oberhalb der Tragstege 3a, 3b jeweils ein weiterer (nicht veranschaulichter) Tragsteg angeordnet ist. Derartige mehretagige Dachträger sind ebenfalls Stand der Technik und nicht Gegenstand der vorliegenden Erfindung.

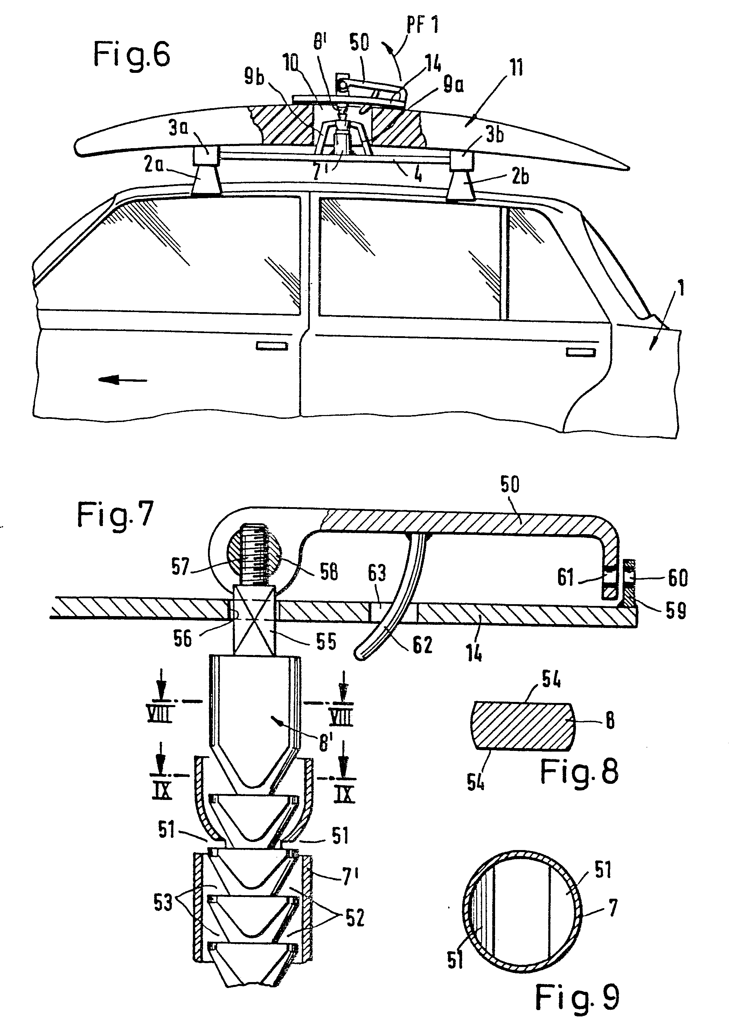

Bei dem Ausführungsbeispiel gemäß Fig. 6-9 sind auf dem Dach eines Kraftfahrzeuges 1 mittels bekannter (lediglich schematisch dargestellter) Paare von Dachrinnenspannern 2a, 2b hiermit verbundene Tragstege 3a bzw. 3b fest verbunden, die parallel zur Querachse des Kraftfahrzeuges 1 verlaufen. Zwischen den Tragstegen 3a, 3b verläuft parallel zu der Längsachse des Kraftfahrzeuges 1 ein Verbindungstragsteg 4, welcher an beiden Enden mit den Tragstegen 3a, 3b verbunden ist.

Der Verbindungstragsteg 4 weist in seinem mittleren Teil einen nach oben weisenden Vorsprung in Form einer vertikalen Zylinderbüchse 7'auf, die ihrerseits zur Aufnahme eines Zugbolzens 8' bestimmt ist. Von dem oberen Ende der Zylinderbüchse 7', und zwar diametral von der Vorderseite und Rückseite ausgehend, verläuft je eine Verstrebung 9a, 9b zu dem zugeordneten Verbindungstragsteg 4. Auf diese Weise ergibt sich eine solche Querschnittsform der Zylinderbüchse 7' mit den Verstrebungen 9a, 9b, daß ein Formschlußeingriff in eine Schwertkastenaussparung 10 eines Wasserfahrzeugrumpfes 11 mit geringem Dreh- und längsaxialem Verschiebespiel möglich ist.

Der Zugbolzen 8' weist an seinem oberen Ende einen
Exzenterhebel 50 auf, der zur Anlage gegen eine
als rechteckige Blattfeder ausgebildete konvexe
Druckplatte 14 bestimmt ist. Die Abmessungen der
Druckplatte 14 müssen hierbei in der Transportstellung allseitig die Querschnittsabmessungen der
Schwertkastenaussparung 10 übersteigen.

Wie sich am besten aus Fig. 7-9 ergibt, weist die
Zylinderbüchse 7' zwei diametrale Eindrückungen 51
auf, wobei der untere Endabschnitt des Zugbolzens
8' einen der Zylinderbüchse 7' im Bereich der Eindrückung entsprechenden Querschnitt aufweist
(vgl. Fig. 3 und 4). Der Zugbolzenendabschnitt
weist mehrere in Axialrichtung in gleichen Abständen aufeinanderfolgende kegelstumpfartige
Querschnittreduzierungsabschnitte 52 auf, deren
Schulterflanken 53 dem oberen Bolzenende zugewendet sind. Um einen lösbaren axialen Verriegelungseingriff zwischen dem Zugbolzen 8' und der Zylinderbüchse 7' herbeizuführen, wird der Zugbolzen 8'
von oben her so in die Zylinderbüchse 7' eingeschoben, daß die beiden Abflachungen 54 (Fig. 8) des
Zugbolzens 8' mit den Eindrückungen 52 ausgerichtet sind. Ist der Zugbolzen 8' soweit eingeführt,
daß die Druckplatte 14 von oben her gegen den (in
Fig. 2 nicht veranschaulichten) Wasserfahrzeugrumpf
11 anliegt, so wird der Zugbolzen 8' um 90$^{\circ}$ gedreht, wodurch der in Fig. 2 dargestellte axiale
Verriegelungseingriff herbeigeführt ist.

Ein oberer Endabschnitt 55 des Zugbolzens 8' weist einen Rechteckquerschnitt auf und verläuft durch einen Rechteckdurchtritt 56 entsprechenden Querschnitts der Druckplatte 14 nach oben. Der Endabschnitt 55 läuft in einen Gewindezapfen 57 aus, auf welchen ein Lagerquerzapfen 58 für den Exzenterhebel 50 geschraubt ist. An dem einen Ende der Druckplatte 14 ist ein Lappen 59 mit einem Durchtritt 60 befestigt, welcher mit einem entsprechenden Durchtritt 61 an einer Endabwinkelung des Exzenterhebels 50 in Ausrichtung steht, sofern der Exzenterhebel 50 eine in Fig. 7 dargestellte Spannstellung einnimmt. Der Exzenterhebel 50 weist außerdem einen in Spannstellung in die Mittelaussparung 10 des Wasserfahrzeugrumpfes 11 eingreifenden Drehsicherungsvorsprung 62 auf, welcher gleichzeitig ein Schlitzloch 63 der Druckplatte 14 durchsetzt.

Zur Befestigung eines Wasserfahrzeugrumpfes 11 wird dessen Schwertkastenaussparung 10 bei aus der Zylinderbüchse 7' herausgezogenem Zugbolzen 8' mit der Zylinderbüchse 7' bzw. den Verstrebungen 9a, 9b in Eingriff gebracht und abgesenkt, so daß der vordere und hintere Bereich des Wasserfahrzeugrumpfes 11 auf den Tragstegen 3a bzw. 3b ruht. Darauf wird die Druckplatte 14, die sich mit dem Zugbolzen 8' über dessen Endabschnitt 55 in formschlüssiger Drehmitnahmeverbindung befindet und durch den Lagerquerzapfen 58 auf dem Zugbolzen 8' in ihrer Lage gehalten wird, quer über der Schwertkastenaussparung 10 ausgerichtet, wonach eine Einführung des Zugbolzens 8' in die Zylinderbüchse 7' soweit möglich ist, daß die Druckplatte 14 quer auf der Schwertkastenaussparung 10 liegt. Alsdann wird die

BAD ORIGINAL

Druckplatte 14 um eine Vierteldrehung gedreht, bis sie parallel zu der Schwertkastenaussparung 10 verläuft. Dadurch wird aber gleichzeitig auch der Zugbolzen 8' um eine Vierteldrehung in der Zylinderbüchse 7' gedreht, wobei ein Paar der Schulterflanken 53 gegenüber den Eindrückungen 51 in einen axialen Verriegelungseingriff gelangt. Während des Einführens des Zugbolzens 8' befindet sich der Exzenterhebel 50 in einer etwa parallel zu dem Zugbolzen 8' verlaufenden Freigabestellung. Ist nun der Verriegelungseingriff zwischen dem Zugbolzen 8' und der Zylinderbüchse 7' hergestellt, so kann der Exzenterhebel 50 in seine in Fig. 7 dargestellte Spannstellung abgeschwenkt werden, wobei der Drehsicherungsvorsprung 62 in einen Eingriff mit der Schwertkastenaussparung 10 des Wasserfahrzeugrumpfes 11 gelangt. Wird nun noch der Exzenterhebel 50 in seiner Spannstellung verriegelt, indem durch die Durchtritte 60, 61 beispielsweise der Bügel eines Vorhängeschlosses (nicht gezeigt) geführt wird, so ist der Wasserfahrzeugrumpf 11 diebstahlsicher auf dem Dachträger fixiert.

Beim erstmaligen Befestigen des Wasserfahrzeugrumpfes 11 muß der Exzenterhebel 50 mit dem Lagerquerzapfen 58 gegenüber dem Zugbolzen 8' durch ein- oder mehrmaliges Drehen axial so eingestellt werden, daß sich in der Spannstellung des Exzenterhebels 50 eine vorgegebene (nicht zu große und nicht zu geringe) Kraft auf die Druckplatte 14 übertragen läßt.

Wird in der Spannstellung des Exzenterhebels 50 versucht, die Druckplatte 14 um eine Vierteldrehung zu drehen, um den axialen Verriegelungseingriff zwischen dem Zugbolzen 8'und der Zylinderbüchse 7' aufzuheben, so scheitert dies daran, daß der Drehsicherungsvorsprung 62 gegen eine der beiden Seitenflächen der Schwertkastenaussparung 10 anschlägt. Eine Lösung des Verriegelungseingriffes zwischen dem Zugbolzen 8' und der Zylinderbüchse 7' ist also nur dann möglich, wenn der Exzenterhebel 5 zumindest soweit in Richtung der Freigabestellung nach oben geschwenkt wird (vgl. gekrümmten Pfeil Pf1 von Fig. 6), daß der Drehsicherungsvorsprung 62 außer Eingriff mit der Schwertkastenaussparung 10 gelangt. Dann allerdings ist eine Drehung der Druckplatte 14 um 90$^\circ$ möglich, wobei infolge der Mitnahme des Zugbolzens 8' auch der axiale Verriegelungseingriff mit der Zylinderbüchse 7' aufgehoben wird. Es kann dann der Zugbolzen 8' mit der Druckplatte 14 sowie dem Exzenterhebel 50 nach oben herausgezogen werden, wonach der Wasserfahrzeugrumpf 11 von dem Dachträger abgehoben werden kann.

0022221

— 1. —

255 P 1/2 EPA

Josef  S c h n e l l, Rosenheimer Straße 15,
8201  Söchtenau

- - - - - - - - - - - - - - - - - - - -

Kraftfahrzeug-Dachträger für einen Wasserfahrzeugrumpf

- - - - - - - - - - - - - - - - - - - - - -

Patentansprüche
- - - - - - - -

1. An einem Kraftfahrzeug anzubringender Dachträger für einen Wasserfahrzeugrumpf mit einer Mittelaussparung, insbesondere für ein Surfbrett mit
Schwertkastenaussparung, umfassend zumindest zwei
im Abstand parallel zur Fahrzeugquerachse oberhalb des Daches verlaufende Tragstege, einen zwischen den Tragstegen parallel zur Kraftfahrzeuglängsachse verlaufenden Verbindungstragsteg, welcher in seinem mittleren Teil einen nach oben weisenden, zum Eingriff in die Schwertkastenaussparung bestimmten Vorsprung aufweist, und eine einen
Bestandteil einer Befestigungseinrichtung bildende Druckplatte, welche zur oberen Anlage gegen die
Mittelaussparung bestimmt sowie lösbar mit dem Vorsprung zu verbinden ist und mit ihren Abmessungen die Querschnittsabmessungen der Schwertkastenaussparung übersteigt, dadurch gekennzeichnet, daß der Vorsprung in seinem Querschnitt der Mittelaussparung (10) angepaßt ist und daß die Druckplatte (14) als rechteckige Blattfeder ausgebildet ist.

2. Dachträger nach Anspruch 1, dadurch gekennzeichnet, daß der Vorsprung als Zapfen (7) mit einer Gewindebohrung oder als Gewindezapfenende zur Aufnahme eines Schraubbolzens (8) bzw. einer Mutter ausgebildet ist.

3. Dachträger nach Anspruch 2, dadurch gekennzeichnet, daß in Verbindung mit dem Schraubbolzen (8) oder der Mutter eine Schloßsicherung vorgesehen ist.

4. Dachträger nach Anspruch 1, dadurch gekennzeichnet, daß der Verbindungstragsteg (4b) parallel zur Fahrzeuglängsachse verstellbar ist.

5. Dachträger nach einem der Ansprüche 1 und/oder 4, gekennzeichnet durch mehrere parallel zur Kraftfahrzeuglängsachse verlaufende Verbindungstragstege (4a, 4b) für je einen Wasserfahrzeugrumpf (11).

6. Dachträger nach Anspruch 1, dadurch gekennzeichnet, daß auf den Vorsprung drehfest ein Zusatzvorsprung (16) zur Übereinanderlagerung zweier Wasserfahrzeugrümpfe aufsetzbar ist.

7. Dachträger nach Anspruch 1, dadurch gekennzeichnet, daß der Vorsprung eine vertikale Aufnahme für einen Zugbolzen (8') aufweist, dessen unteres Ende durch eine Teildrehung mit der Aufnahme in einen lösbaren axialen Verriegelungseingriff zu bringen ist, daß an das obere Ende des Zugbolzens, welches durch einen mittleren Teil der Druckplatte (14) verläuft, ein Exzenterhebel (50) angelenkt ist, dessen freies Ende aus einer etwa parallel zu dem Zugbolzen verlaufenden Freigabestellung in eine etwa parallel zu der Druckplatte verlaufende Spannstellung abschwenkbar und mit dieser verriegelbar ist, und daß der Exzenterhebel einen in Spannstellung in die Mittelaussparung (10) des Wasserfahrzeugrumpfes (11) eingreifenden Drehsicherungsvorsprung (62) aufweist.

8. Dachträger nach Anspruch 7, dadurch gekennzeichnet, daß die Aufnahme für den Zugbolzen (8) durch eine vertikale Zylinderbüchse (7) gebildet ist, welche am oberen Endabschnitt zumindest eine in Axialrichtung kurze, sich nur über einen kleineren Umfangsbereich erstreckende symmetrische Eindrückung (51) oder Sicke aufweist, und daß der untere Endabschnitt des Zugbolzens einen der Zylinderbüchse im Bereich der Eindrückung oder Sicke entsprechenden Querschnitt aufweist und mit zumindest zwei in Axialrichtung in gleichen Abständen aufeinanderfolgenden kegelstumpfartigen Querschnittsreduzierabschnitten (52) versehen ist, deren Schulterflanken (53) dem oberen Zugbolzenende zugewendet sind.

9. Dachträger nach Anspruch 8, dadurch gekennzeichnet, daß die Zylinderbüchse (7') zwei diametrale Eindrückungen (51) oder Sicken aufweist und daß der Zugbolzen (8') an zwei diametralen Umfangsbereichen entsprechende Abflachungen (54) aufweist.

10. Dachträger nach Anspruch 8 oder 9, dadurch gekennzeichnet, daß der einen nicht kreisförmigen Querschnitt aufweisende Zugbolzen (8') die Druckplatte (14) in einem Durchtritt (56) durchsetzt, dessen Querschnitt demjenigen des Zugbolzens entspricht.

11. Dachträger nach Anspruch 10, dadurch gekennzeichnet, daß auf das obere Ende des Zugbolzens (8') ein Lagerquerzapfen (58) für den Exzenterhebel (50) geschraubt und in Axialrichtung feinverstellbar ist.

Fig.1

0022221

0022221

Fig.2

3a
2a
5
6 — Pf1 9a 9b 4a 5
7
11

5 — Pf1 9a 9b 4b 5
6 6
7
11

3b
2b

2a 2b

Fig.3

12
8'
19a 19b
18 17 16
IV
20a 21a
14
9a 9b
7
4b
IV

Fig.4

19b
18 17 16
21a
7 9b
4b

Fig.5

13
14

Fig.6

PF 1

8' 50 14 11
9b 10 9a
3a 3b
2a 4 2b
7' 1

Fig.7

50
57 58 63 61 60
56 55 62 14 59
8'

54
VIII 8
IX

Fig.8

51 51
7'
53 52

51
7
51

Fig.9

# 0022221

Europäisches Patentamt

**EUROPÄISCHER RECHERCHENBERICHT**

Nummer der Anmeldung

EP 80 10 3617.9

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - A1 - 2 734 511 (B. JAROSCHEK) <br> * Fig. 1 * | 1 | B 60 R 9/08 |
| | DE - U - 7 604 510 (G. BOURGUIGNON) <br> * Fig. * | 1,3, 4,6 | |
| | US - A - 3 406 985 (R.J. BALLENGER et al.) <br> * Fig. 1, 4, Position 66 * | 1 | |
| A | AU - B - 455 220 (T.K. HOSE) <br> * Fig. 1 * | | RECHERCHIERTE SACHGEBIETE (Int. Cl.3) <br><br> B 60 R 9/00 |
| D,A | FR - A1 - 2 391 879 (INTERFILTRE S.A.) <br> * Fig. 1 * | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 15-09-1980 | BECKER |

EPA form 1503.1 06.78